# EUROPÄISCHE PATENTSCHRIFT

(11) **EP 1 371 915 B1**
(45) Veröffentlichungstag und Bekanntmachung des Hinweises auf die Patenterteilung: **12.07.2006**
(21) Anmeldenummer: 03013034.8
(22) Anmeldetag: 10.06.2003
(51) Int. Cl.: F24F 5/00, C09K 5/06, E04B 9/00

(54) **Klimadecke mit PCM**
Chilled ceiling with PCM
Plafond chauffant ou réfrigérant avec PCM

(30) Priorität: 10.06.2002 DE 20208898 U
(43) Veröffentlichungstag der Anmeldung: 17.12.2003
(73) Patentinhaber: Homm, Karl-Georg, 48720 Rosendahl (DE)
(72) Erfinder: Homm, Karl-Georg, 48720 Rosendahl (DE); Boiting, Bernd Dr., 48566 Steinfurt (DE)

(56) Entgegenhaltungen:
- EP-A- 0 992 425
- EP-A- 1 162 409
- WO-A-94/28319
- US-A- 4 259 401
- US-A- 4 482 010
- US-A- 5 944 089

## Beschreibung

Die Neuerung betrifft eine Klimadecke nach dem Oberbegriff des Anspruchs 1.

Derartige Klimadecken sind aus der Praxis bekannt So zeigt beispielsweise die EP 0 992 425 A2 eine Kühldecke mit oberhalb einer inneren Decke angeordneten Rohrleitungen, die von einem Kühlmittel durchflossen werden. Die Rohrleitungen sind von Kühlpanelen formschlüssig umgeben, die die Kühlwirkung breitflächig auf der inneren Decke verteilen und gleichzeitig als Montageelemente dienen, um die Rohrleitungen zu halten und die Kühldecke abzuhängen.

Die US-PS 4,259,401 beschreibt Klimatisierungsanlagen für Gebäude, die mit PCM-Material arbeiten. Dabei werden spezielle Bauelemente porös ausgestaltet und mit PCM getränkt oder mit einem PCM teilweise gefüllt und dann von Temperierungsluft oder Temperierungsflüssigkeit durch- oder umströmt. Die speziellen Bauelemente können gezielt als lasttragende Bauteile in Gebäuden verwendet werden und in dort zu installierende Klimaanlagen wirkungsgradverstärkend integriert werden.

Der Neuerung liegt die Aufgabe zugrunde, eine gattungsgemässe Klimadecke dahingehend zu verbessern, dass diese mit einem möglichst geringen Energieeinsatz betreibbar ist.

Diese Aufgabe wird durch eine Klimadecke mit den Merkmalen des Anspruchs 1 gelöst.

Die Neuerung schlägt mit anderen Worten vor, die Wärmekapazität der Klimadecke durch die Verwendung von Materialien zu vergrössem, welche in dem gewünschten Klimatisierungsbereich einen Phasenübergang aufweisen und die als PCM (= "phase changing material") bezeichnet werden. Durch die latente Energie, die bei einem derartigen Phasenübergang gespeichert bzw. freigesetzt werden kann, ergibt sich die Möglichkeit, Kälte- oder Wärtneenergie in das PCM-Material einzulugern, ohne hierfür spezielle Heizenergie oder Kühlenergie mittels einer Heizungsanlage oder eines Kühlaggregats bereitstellen zu müssen.

Vorteilhaft kann ein Salz oder ein Wachs als PCM Verwendung finden. Derartige Stoffe lassen sich insbesondere in dem übtlcherweise in Frage kommenden Temperaturbereich zwischen 15°C und 35°C, insbesondere um etwa 20-22°C, problemlos so einstellen, dass sie bei einer gewünschten Temperatur einen Phasenübergang zwischen fest und flüssig aufweisen. Zudem handelt es sich bei diesen Stoffen - und insbesondere bei Wachs- um ungefährliches Material so dass im Fall von Leckagen weder Gefährdungen von Personen noch Beschädigungen von Gegenständen zu befürchten sind.

Erfindungsgemäß liegt das PCM in Behältern vorliegen, die auf die Rohrleitungen der Klimadecke aufgelegt werden können. Sie ermöglichen die problemlose Handhabung des PCMs und eine problemlose Nachrüstung bestehender Klimadecken mit dem PCM.

In besonders vorteilhafter und einfacher Weise kann das PCM in Beuteln vorliegen, die verformbar sind. Durch die Verformbarkeit ergibt sich zumindest nach einiger Betriebszeit, wenn das PCM ein- oder mehrmals flüssig geworden ist, eine optimale Anpassung der Beutelform an die verlegten Rohrleitungen der Klimadecke,so dass ein besonders guter Wärmeaustausch zwischen Rohrtdungen und PCM gewährleistet ist.

Unabhängig von Form und Anordnung der Verldeidungsplatten, der Rohrleitungen oder des Trägersystems können die Beutel an die Jewedigen Verhältnisse angepasst auf der Klimadecke verteilt werden.

Die Beutel können vorzugsweise luftdicht und wasserdampfdiffusionsdicht ausgestaltet sein, beispielsweise aus mit Aluminium bedampften Kunststoffolien bestehen, so dass Alterungseinflüsse auf das Wachs möglichst vermieden werden und dementsprechend das Wachs über einen möglichst langen Zeitraum nahezu unveränderte Eigenschaften aufweist.

Insbesondere, wenn das PCM oberhalb der Rohrleitungen angeordnet ist, kann oberhalb des PCMs eine Wärmeisolierung vorgesehen sein, so dass die gewünschte Temperatur, die mittels des PCM über ein vergleichsweise langen Zeitraum gehalten werden kann, insbesondere zum Raum hin abgegeben wird, wobei dieses Temperaturniveau gegenüber der eigentlichen Geschossdecke isoliert ist.

Ein Ausführungsbeispiel der Neuerung wird anhand der rein schematischen Zeichnung nachfolgend näher erläutert.

Darin ist mit 1 allgemein eine Klimadecke bezeichnet, die in an sich bekannter Weise als unterste Schicht, zum Raum hin, Verkleidungsplatten 2 aufweist, auf denen Rohrleitungen 3 aufliegen. Die Rohrleitungen 3 sind von dem Kühl- bzw. Heizmedium durchströmt. Durch den direkten Kontakt zwischen den Rohrleitungen 3 und den Vendeidungsplatten 2 ergibt sich eine optimale Wärmeübertragung vom Kühlmedium über die Verkleidungsplatten 2 an die Raumluft.

Oberhalb der Rohrleitungen 3 ist in an sich bekannter Weise ein Trägersystem 4 aus Längs- und Querträgem vorgesehen, wobei mittels nicht dargestellter Abhänger die gesamte Klimadecke 1 in einem einstellbaren Abstand unterhalb einer vorhandenen Gebäude-Geschossdecke angeordnet ist

Auf die Rohrleitungen 3 sind Beutel 5 aufgelegt, welche mit einem Wachs gefüllt sind, welches bei beispielsweise 21°C einen Phasenübergang von fest nach flüssig aufweist. Oberhalb der Beutel 5 ist eine Temperaturisolierung 6 vorgesehen. Sobald die Temperatur 21 °C übersteigt, erweichen die Beutel 5, da das darin enthaltene Wachs aufschmilzt. Durch ihr Eigengewicht legen sich die Beutel 5 an die Rohrleitungen 3 an, sodass der Temperaturaustausch zwischen Rohrleitungen 3 und den Beuteln 5 möglichst intensiv erfolgen kann.

Bei Verwendung der Klimadecke 1 zum Kühlen kann beispielsweise folgender Effekt ausgenutzt werden:

Wenn tagsüber aufgrund der Sonneneinstrahlung die Raumtemperatur 21 °C überschreitet, wird das Wachs in den Beuteln 5 geschmolzen. Wenn nachts die Aussentemperatur 21°C unterschreitet, so kann - ohne das Einschalten eines Kühlaggregats - durch Zirkulation des Fluids in den Rohrleitungen 3 erreicht werden, dass das Wachs in den Beuteln 5 erstarrt.

Hierzu wird das Fluid mittelbar oder unmittelbar durch die kühle AussenTemperatur auf unter 21 °C gekühlt. So kann beispielsweise ein Abzweig vorgesehen sein, durch den im Bedarfsfall das Fluid an die Aussenluft geführt und dort abgekühlt werden kann, oder es kann ein Wärmetauscher vorgesehen sein, der den Temperaturaustausch zwischen dem Fluid und der Aussenluft ermöglicht. Es ist also lediglich eine vergleichsweise geringe Pumpenleistung erforderlich, ohne Einschaltung eines Kühlaggregats, um das Wachs in den Beuteln 5 erstarren zu lassen.

Am nächsten Tag, wenn die Raumtemperatur wieder über 21 °C ansteigt, behält die Klimadecke 1 über einen langen Zeitraum ihre Temperatur auf einem Niveau von etwa 21°C, wenn nämlich der Phasenübergang des Wachses in den Beuteln 5 erfolgt. Die durch die Ausnutzung dieser latenten Wärme genutzte Kühlenergie wird ohne Einschaltung eines Kühlaggregats genutzt,
sogar die Zirkulation des Kühlfluids in den Rohrleitungen 3 ist hierzu nicht erforderlich, so dass diese Kühlwirkung vollständig ohne Hilfsenergie genutzt werden kann.

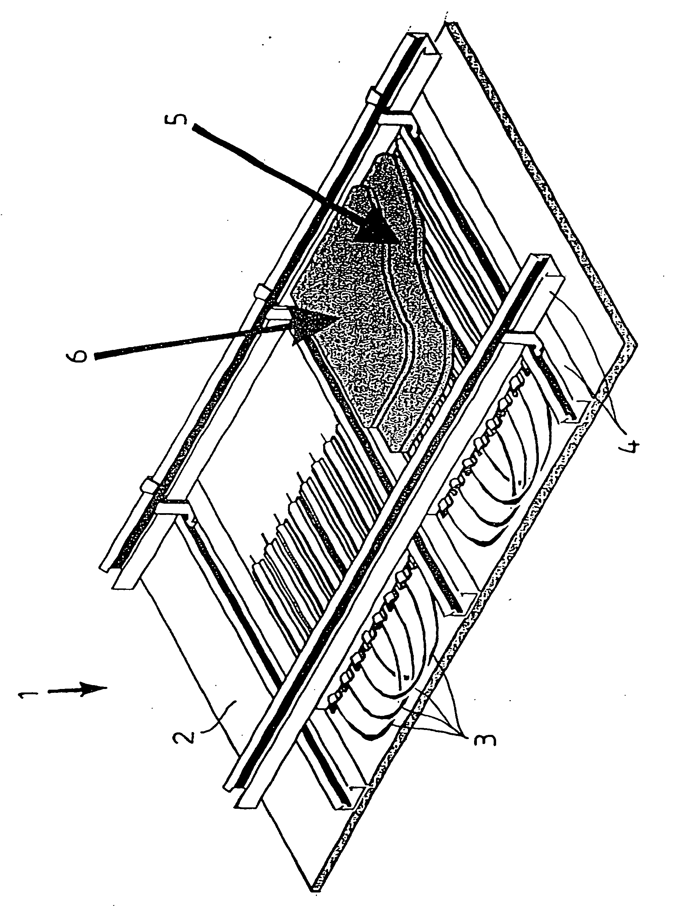

## Patentansprüche

1. Klimadecke,
mit Rohrleitungen, die mit einem Heiz- und/oder Kühlfluid durchströmbar sind, und mit einer Trägeranordnung, welche dazu gedacht ist, die Rohleitungen im Abstand unter einer Geschossdecke eines Gebäudes zu halten,
**gekennzeichnet durch**
ein als PCM bezeichnetes Material, welches in dem gewünschten Klimabereich einen Phasenübergang aufweist, und welches den Rohrleitungen (3) derart benachbart angeordnet ist, dass es **durch** sie gekühlt und/oder erwärmt werden kann, wobei das PCM in Behältern angeordnet ist, welche auf die Rohrleitungen auflegbar sind.

2. Klimadeckel nach Anspruch 1, **dadurch gekennzeichnet, dass** das PCM durch ein Wachs gebildet ist.

3. Klimadecke nach Anspruch 1, **dadurch gekennzeichnet, dass** das PCM durch ein Salz gebildet ist.

4. Klimadecke nach einem der Ansprüche 1 bis 3, **dadurch gekennzeichnet, dass** die Behälter als verformbarer Beutel (5) ausgestaltet sind.

5. Klimadecke nach Anspruch 4, **dadurch gekennzeichnet, dass** die Beutel (5) luftdicht sind.

6. Klimadecke nach Anspruch 4 oder 5, **dadurch gekennzeichnet, dass** die Beutel (5) wasserdampfdiffusionsdicht sind.

7. Klimadecke nach einem der Ansprüche 4 bis 6, **dadurch gekennzeichnet, dass** die Beutel (5) aus einem metallbedampften Kunststoffmaterial bestehen.

8. Klimadecke nach einem der vorhergehenden Ansprüche, **dadurch gekennzeichnet, dass** das PCM oberhalb der Rohrleitungen (3) angeordnet ist, und dass eine Isolierungsschicht (6) oberhalb des PCM vorgesehen ist.

## Claims

1. An air-conditioning ceiling, comprising tube conduits adapted to have a heating and/or cooling fluid flowing therethrough, and comprising a support structure provided to hold the tube conduits at a distance under the floor ceiling of a building,
**characterized by**
a material designated as PCM which in the desired climate range has a phase transition, and which is arranged adjacent to the tube conduits (3) in a manner allowing it to be cooled and/or refrigerated by the tube conduits, the PCM being arranged in containers adapted to be laid onto the tube conduits.

2. The air-conditioning ceiling according to claim 1, **characterized in that** the PCM is formed by a wax.

3. The air-conditioning ceiling according to claim 1, **characterized in that** the PCM is formed by a salt.

4. The air-conditioning ceiling according to any one of claims 1 to 3, **characterized in that** the containers are provided as a deformable bags (5).

5. The air-conditioning ceiling according to claim 4, **characterized in that** the bags (5) are airtight.

6. The air-conditioning ceiling according to claim 4 or 5, **characterized in that** the bags (5) are water vapor diffusion tight.

7. The air-conditioning ceiling according to any one of claims 4 to 6, **characterized in that** the bag (5) is made of a plastics material with a vapor-deposited metal layer.

8. The air-conditioning ceiling according to any one of the preceding claims, **characterized in that** the PCM is arranged above the tube conduits (3) and that an insulating layer (6) is provided above the PCM.

## Revendications

1. Plafond chauffant ou réfrigérant comprenant des tuyaux adaptés d'être passer à travers par un fluide de chauffage et/ou de réfrigération, et comprenant une structure de support visant à maintenir les tuyaux écarté sous un plafond d'un bâtiment,
**caractérisé par**
un matériau dit PCM, présentant un point de transition de phase dans la plage climatique désirée, et qui est disposé voisin des tuyaux (3) de telle manière qu'il peut être refroidi et/ou chauffé par les tuyaux, le PCM étant disposé dans des récipients adaptés d'être posé sur les récipients.

2. Plafond chauffant ou réfrigérant selon la revendication 1, **caractérisé en ce que** le PCM est formé par un cire.

3. Plafond chauffant ou réfrigérant selon la revendication 1, **caractérisé en ce que** le PCM est formé par un sel.

4. Plafond chauffant ou réfrigérant selon une des revendication 1 à 3, **caractérisé en ce que** les récipients sont en forme de poches déformables.

5. Plafond chauffant ou réfrigérant selon la revendication 4, **caractérisé en ce que** les poches (5) sont étanches à l'air.

6. Plafond chauffant ou réfrigérant selon la revendication 4 ou 5, **caractérisé en ce que** les poches (5) sont imperméables à la diffusion de vapeur d'eau.

7. Plafond chauffant ou réfrigérant selon une des revendications 4 à 6, **caractérisé en ce que** les poches (5) sont formées d'un matériau plastique métallisé.

8. Plafond chauffant ou réfrigérant selon une des revendications précédentes, **caractérisé en ce que** le PCM est disposé au-dessus des tuyaux (3), et qu'une couche d'isolation (6) est prévue au-dessus du PCM.
